# EUROPEAN PATENT APPLICATION

(11) **EP 2 296 207 A1**
(43) Date of publication of application: **16.03.2011**
(21) Application number: 09750353.6
(22) Date of filing: 18.05.2009
(51) Int. Cl.: H01M 4/02, H01M 4/04, H01M 4/36, H01M 4/52

(54) **ELECTRODE FOR NON-AQUEOUS ELECTROLYTE SECONDARY BATTERY, MANUFACTURING METHOD THEREFOR, AND NON-AQUEOUS ELECTROLYTE SECONDARY BATTERY**

(30) Priority: 23.05.2008 JP 2008135596
(71) Applicant: Panasonic Corporation, Kadoma-shi Osaka 571-8501 (JP)
(72) Inventor: OKAMURA Kazuhiro c/o Panasonic Corporation, Osaka-shi Osaka 540-6207 (JP); NANNO Tetsuo c/o Panasonic Corporation, Osaka-shi Osaka 540-6207 (JP)
(74) Representative: TBK-Patent
(86) International application number: PCT/JP2009/002177
(87) International publication number: WO 2009/141991

(57) **Abstract**

This invention provides an electrode for a non-aqueous electrolyte secondary battery and a method for producing the electrode. The electrode includes a current collector and an electrode mixture layer formed on a surface of the current collector, and the electrode mixture layer includes an active material and a binder. The active material comprises first active material particles of substantially spherical shape and second active material particles of non-spherical shape. The second active material particles are particles of the first active material particles crushed and are packed so as to dose gaps between the first active material particles. This invention can provide an electrode for a non-aqueous electrolyte secondary battery in which the electrode mixture layer has a higher packing rate than conventional rates.

## Description

### [Technical Field]

The invention relates to an electrode for a non-aqueous electrolyte secondary battery and a non-aqueous electrolyte secondary battery, and more particularly, to an improvement in the electrode mixture layer included in an electrode for a non-aqueous electrolyte secondary battery.

### [Background Art]

Non-aqueous electrolyte secondary batteries, including lithium ion secondary batteries, are widely used as the power source for use in the field of portable appliances, such as personal computers, cellular phones, digital cameras, and camcorders. Non-aqueous electrolyte secondary batteries have high energy densities, but non-aqueous electrolyte secondary batteries having higher energy density are being developed, for example, as the source for powering electric vehicles in connection with environmental problems and resources problems.

A non-aqueous electrolyte secondary battery includes: a positive electrode comprising a positive electrode current collector and a positive electrode mixture layer formed on a surface of the positive electrode current collector; a negative electrode comprising a negative electrode current collector and a negative electrode mixture layer formed on a surface of the negative electrode current collector; a porous insulating layer interposed between the positive electrode and the negative electrode; a non-aqueous electrolyte; and a battery case.

The positive electrode mixture layer includes a positive electrode active material as an essential component, and contains a binder, a conductive agent, and the like as optional components. The positive electrode mixture layer is formed by preparing an electrode mixture paste including a positive electrode active material, a binder, and a conductive agent, applying it onto a surface of a positive electrode current collector, and drying it. The positive electrode current collector with the positive electrode mixture layer formed thereon is compressed to obtain a positive electrode.

The negative electrode mixture layer includes a negative electrode active material as an essential component, and contains a binder, a conductive agent, and the like as optional components. The negative electrode mixture layer is formed by preparing an electrode mixture paste including a negative electrode active material, a binder, and a conductive agent, applying it onto a surface of a negative electrode current collector, and drying it. The negative electrode current collector with the negative electrode mixture layer formed thereon is compressed to obtain a negative electrode.

The charge/discharge capacity of the non-aqueous electrolyte secondary battery is dependent on, for example, the amount of the positive electrode active material and the negative electrode active material (hereinafter also referred to as simply "the amount of active material) contained in the battery case. That is, increasing the amount of active material contained in a battery can provide a non-aqueous electrolyte secondary battery with excellent charge/discharge capacity and high energy density. Various attempts have been made to increase the amount of active material contained in a non-aqueous electrolyte secondary battery.

The shape and size of batteries are predetermined. Thus, in order to increase the amount of active material contained therein, it is effective to decrease the volume of the other components than the active material. A battery also has the volume of void spaces in addition to the volume of the above-described battery components. Decreasing the volume of the void spaces in the battery, i.e., increasing the packing rate of the electrode mixture layer, results in a relative increase in the amount of active material. This can increase the charge/discharge capacity of the non-aqueous electrolyte secondary battery.

As described above, since particles are used as the active material, the positive electrode mixture layer and the negative electrode mixture layer are porous. In the production process of the positive electrode and the negative electrode, the coating of electrode mixture paste is commonly compressed (rolled), but the packing rate of the electrode mixture layer is not sufficient.

The packing rate can be further increased, for example, by changing the method by which particles are packed. With respect to the packing of particles, various studies have been made. An approach to packing particles so as to decrease void spaces is to pack particles with a relatively small mean particle size into the gaps between particles with a relatively large mean particle size.

For example, NPL 1 describes the use of particles having two peaks in the particle size distribution. Also, PTL 1 proposes the use of an active material that includes, before rolling, particles having a relatively large particle size and particles having a small particle size.

PTL 2 discloses active material particles which include secondary particles composed of agglomerated primary particles. PTL 2 states that it is preferable that the secondary particles break up so easily that they naturally break up into primary particles in the electrode production process, and that the broken secondary particles be dispersed as the primary particles to form a monodisperse system.

### [Citation List]

### [Patent Literature]

[PTL 1] Japanese Laid-Open Patent Publication No. Hei 6-290780
[PTL 2] Japanese Laid-Open Patent Publication No. 2004-192846

### [Non Patent Literature]

[NPL 1] Funtai Kogaku no Kiso (Basics of Particle Technology), Chapter 4, article 1, pages 151 to 153, published by THE NIKKAN KOGYO SHIMBUN, LTD. in 1992.

### [Summary of Invention]

### [Technical Problem]

However, small particles have a large friction resistance between the particles, compared with large particles. Also, according to the methods as proposed by NPL 1 and PTL 1 in which particles having a small particle size before compression are used, when a compressive stress is applied to pack the particles from outside, the compressive stress tends to be distributed among the large number of particles. That is, it is thought that the force applied to each individual particle becomes small. In particular, when larger particles are relatively small or the volume ratio of small particles to the whole particles is high, it is thought that increasing the packing rate of the electrode mixture layer is difficult.

In PTL 2, in an early stage of compression, the whole active material is in the form of secondary particles. It is thus thought that the compressive stress is unlikely to be scattered, and that the compressive stress applied to each individual secondary particle is relatively large. However, when the secondary particles are broken up into primary particles to form a monodisperse system, it is thought that there are a large number of spaces between the primary particles. It is thus believed that increasing the packing rate of the electrode mixture layer is difficult.

It is therefore an object of the invention to provide an electrode for a non-aqueous electrolyte secondary battery in which the electrode mixture layer has a higher packing rate than conventional rates, a method for producing such an electrode, and a non-aqueous electrolyte secondary battery with excellent charge/discharge capacity.

### [Solution to Problem]

The electrode for a non-aqueous electrolyte secondary battery according to the invention includes a current collector and an electrode mixture layer formed on a surface of the current collector. The electrode mixture layer includes an active material and a binder, and the active material comprises first active material particles of substantially spherical shape and second active material particles of non-spherical shape. The second active material particles are particles of the first active material particles crushed and are packed so as to close gaps between the first active material particles.

The packing rate of the electrode mixture layer is preferably 0.79 or more.

Also, the non-aqueous electrolyte secondary battery according to the invention includes an electrode group, a non-aqueous electrolyte, and a battery case, and the electrode group includes the above-mentioned electrode for a non-aqueous electrolyte secondary battery, a counter electrode, and a porous insulating layer interposed therebetween.

In a preferable embodiment of the electrode for a non-aqueous electrolyte secondary battery according to the invention, the active material comprises a nickel lithium composite oxide.

The method for producing an electrode for a non-aqueous electrolyte secondary battery according to the invention includes the steps of: preparing an electrode mixture paste including first active material particles and a binder; applying the electrode mixture paste onto a surface of a current collector and drying it to form a coating; and compressing the coating to form an electrode mixture layer. In the step of compressing, the coating is compressed to partially crush the first active material particles, so that second active material particles are formed and packed so as to dose gaps between the first active material particles.

In the step of compressing, the coating is preferably compressed so that the mean particle size of the active material decreases by 20% to 50% relative to the mean particle size of the active material before the compression.
Also, it is preferable to include, before the step of preparing the electrode mixture paste, the step of crushing the first active material particles and then heating them to re-agglomerate them.

Also, the invention provides an electrode for a non-aqueous electrolyte secondary battery produced by the above-mentioned production method.

### [Advantageous Effects of Invention]

According to the invention, since the packing rate of the electrode mixture layer of an electrode for a non-aqueous electrolyte secondary battery can be made higher than conventional rates, it is possible to provide a non-aqueous electrolyte secondary battery with excellent charge/discharge capacity.

### [Brief Description of Drawings]

[FIG. 1] A cross-sectional view schematically showing an electrode mixture layer in which second active material particles are packed so as to dose the gaps between first active material particles;
[FIG. 2] A cross-sectional view schematically showing an electrode mixture layer in which only first active material particles are packed;
[FIG 3] A cross-sectional view schematically showing an electrode mixture layer in which only second active material particles are packed;
[FIG 4] A cross-sectional view schematically showing an electrode mixture layer in which second active material particles are packed so as to dose the gaps between first active material particles, wherein the first active material particles and the second active material particles are agglomerated primary particles;
[FIG 5] A cross-sectional view schematically showing an electrode mixture layer in which only first active material particles are packed, wherein the first active material particles are secondary particles;
[FIG 6] A cross-sectional view schematically showing an electrode mixture layer in which only primary particles of an active material crushed by compression are packed;
[FIG 7] A graph showing the particle size distribution of an active material according to Example 1; and [FIG 8] An SEM of a cross-section of an electrode mixture layer according to Example 1.

### [Description of Embodiments]

The electrode for a non-aqueous electrolyte secondary battery according to the invention includes a current collector and an electrode mixture layer formed on a surface of the current collector, and the electrode mixture layer includes an active material and a binder. The active material comprises first active material particles of substantially spherical shape and second active material particles of non-spherical shape. The second active material particles are particles of the first active material particles crushed and are packed so as to dose gaps between the first active material particles.

Hereinafter, particle size is used as a parameter representing particle size, and circularity is used as a parameter representing particle shape. The particle size as used in the invention refers to median diameter in volume basis particle size distribution. Also, the circularity as used herein refers to the ratio of the circumference of a circle (equivalent circle) having the same area as the projected area of a particle to the perimeter of the two-dimensional projected image of the particle. Circularity is, for example, 0.952 for a regular hexagon, 0.886 for a square, and 0.777 for a regular triangle.

In the invention, the first active material particles have a substantially spherical shape and a relatively large particle size. As used herein, "substantially spherical" refers to shapes which are usually recognizable as spherical by one with ordinary skill in the art. Specific examples include not only spherical shapes but also shapes commonly referred to as spheroidal, egg like, rugby ball like, and quail's egg like shapes. The average circularity of the first active material particles is, for example, preferably 0.95 to 1.00, and more preferably 0.97 to 1.00. The mean particle size of the first active material particles is, for example, 5 to 20 µm.

The second active material particles are particles of the first active material particles crushed. Thus, the second active material particles have a non-spherical shape and a relatively small particle size. As used herein, "non-spherical" refers to shapes which are not usually recognizable as spherical by one with ordinary skill in the art. Specific examples include so-called irregular shapes such as block, lump, polyhedron, dendrite, coral, grape bunch, scale, and fiber. The average circularity of the second active material particles is, for example, 0.85 to 0.95. The mean particle size of the second active material particles is, for example, 0.1 to 5 µm.

The state of the second active material particles packed so as to dose the gaps between the first active material particles is described. The packed state of the active material in the electrode mixture layer is specifically described with reference to drawings, but the invention is not to be construed as being limited to these drawings.

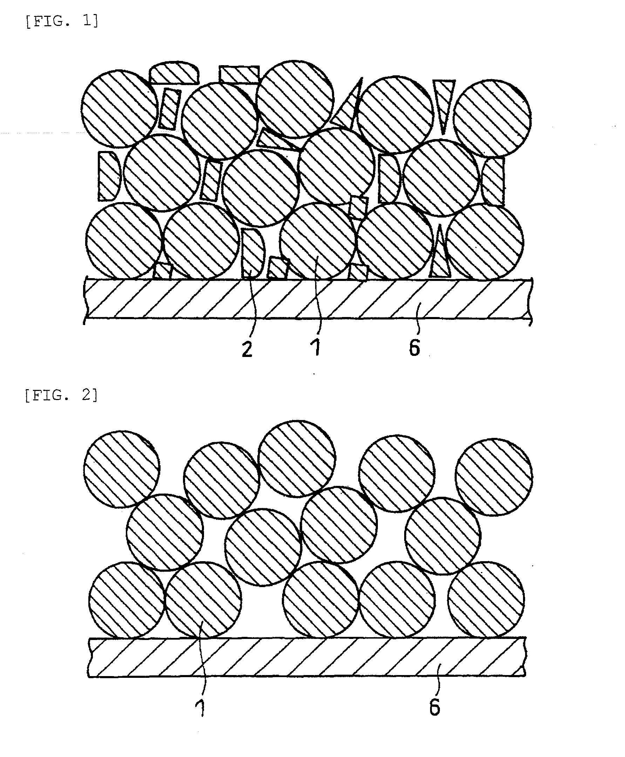

FIG 1 is a cross-sectional view schematically showing an electrode mixture layer in which second active material particles 2 are packed so as to dose the gaps between first active material particles 1. When the active material is packed as illustrated in FIG 1, it can be said that the packed state of the active material is good.

FIG 2 is a cross-sectional view schematically showing an electrode mixture layer in which only first active material particles 1 are packed. In the packed state illustrated in FIG 2, there are a large amount of gaps between the first active material particles. It is thus thought that the active material is not sufficiently packed.

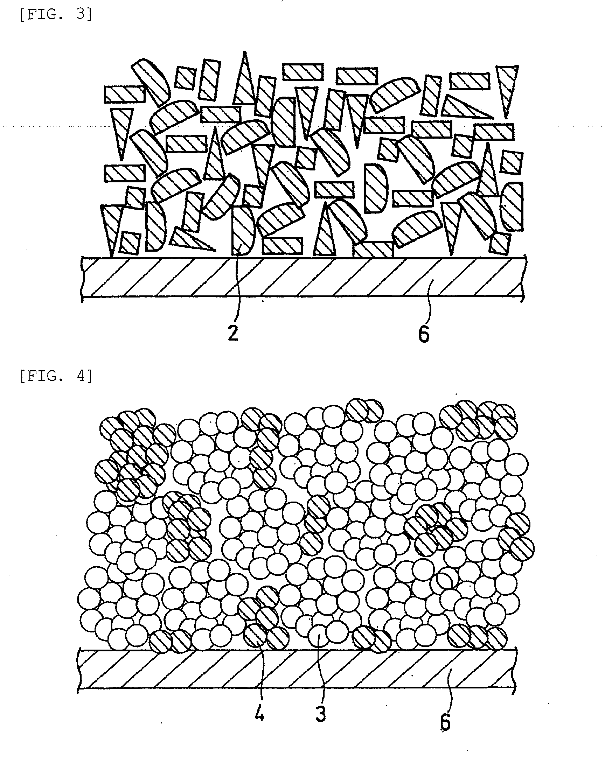

FIG. 3 is a cross-sectional view schematically showing an electrode mixture layer in which only second active material particles 2 are packed. In the packed state illustrated in FIG 3, there are a large amount of gaps due to the influence of the friction resistance between the second active material particles. It is thus thought that the active material is not sufficiently packed.

FIG. 4 is a cross-sectional view schematically showing an electrode mixture layer in which second active material particles 4 are packed so as to dose the gaps between first active material particles 3 and the first active material particles and the second active material particles are agglomerated primary particles (secondary particles). When the active material is packed as illustrated in FIG 4, the packed state is good just like the state of FIG. 1. In addition, since the active material particles include secondary particles, the reaction area increases and electrolyte penetration improves.

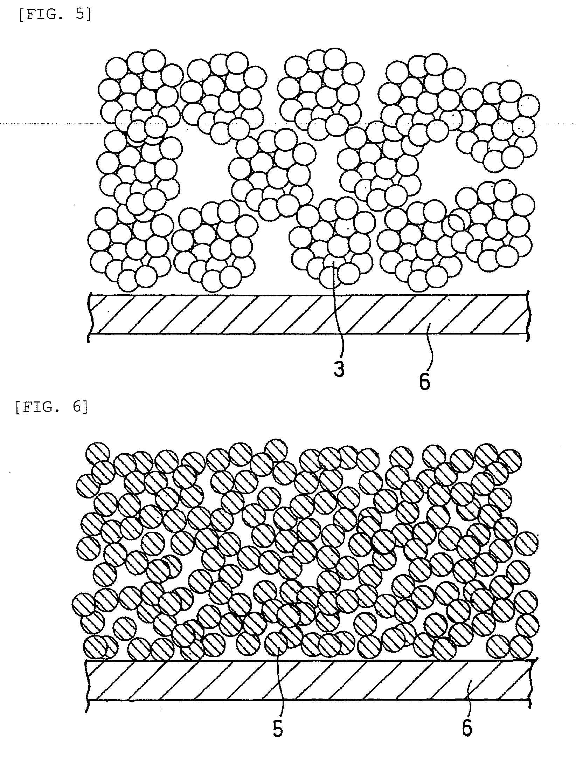

FIG 5 is a cross-sectional view schematically showing an electrode mixture layer in which only first active material particles 3 are packed and the first active material particles 3 are secondary particles. When the active material is packed as illustrated in FIG 5, it can also be said that the active material is not sufficiently packed.

FIG 6 is a cross-sectional view schematically showing an electrode mixture layer in which only primary particle 5, which have been produced by compression, are packed. When the active material is packed as illustrated in FIG 6, it can also be said that the active material is not sufficiently packed.

The electrode for a non-aqueous electrolyte secondary battery can be produced by the method described below.
An electrode mixture paste containing first active material particles and a binder is prepared. The electrode mixture paste is applied onto a current collector surface and dried to form a coating. At this time, the coating is porous and has a relatively small packing rate. Thereafter, in order to further increase the packing rate, the coating is compressed to form an electrode mixture layer. In this way, an electrode for a non-aqueous electrolyte secondary battery can be obtained.

In the invention, the first active material particles are partially crushed in the step of compressing the electrode mixture layer. That is, when the coating is compressed, the first active material particles are crushed, so that non-spherical second active material particles are formed. As a result, the second active material particles are efficiently packed so as to close the gaps between the first active material particles, and hence, the packing rate of the electrode mixture layer is significantly improved.

The packing rate of the electrode mixture layer can be obtained by (true volume of electrode mixture layer)/(apparent volume of electrode mixture layer). The true volume of the electrode mixture layer can be determined from the true densities of the active material, conductive agent, binder, and the like contained in the electrode mixture layer and the weight ratios thereof in the electrode mixture. The apparent volume of the electrode mixture layer can be calculated from the thickness and area of the electrode mixture layer. The packing rate of the electrode mixture layer is a value less than 1. On the assumption that the electrode mixture layer has no gaps, the packing rate is the highest value of 1. The packing rate of the electrode mixture layer is, for example, preferably 0.79 or more, and more preferably 0.85 to 0.90.

In order to obtain the first active material particles and the second active material particles as described above, it is preferable that the active material particles not be crushed, where possible, before and during the step of applying the electrode mixture paste onto the current collector and drying it to form the coating. Also, it is preferable that the active material particles be partially crushed in the step of compressing the coating. That is, it is preferable that the active material particles have: such a mechanical strength that they are not crushed by the stress exerted on the active material particles before and during the step of applying the electrode mixture paste onto the current collector surface and drying it to form the coating; and such a mechanical strength that they are partially crushed to form second active material particles in the step of compressing.

By controlling the mechanical strength of the active material particles and the compressive stress in the step of compressing, it is possible to control the ratio of the first active material particles crushed.

In the invention, the mechanical strength of the active material particles refers to compression rupture strength. In the invention, compression rupture strength is measured using particles having a size equal to the D50 (median diameter) of the first active material particles and a circularity of 0.97. When the compression rupture strength is, for example, 40 to 100 MPa, such particles are unlikely to be crushed before and during the step of forming the coating, and thus 40 to 100 MPa is preferable. Compression rupture strength can be measured, for example, with a micro-compression tester MCT-W available from Shimadzu Corporation.

The method for controlling the mechanical strength of the active material particles is not particularly limited. While the mechanical strength changes with the material, shape, particle size, etc. of the active material particles, the mechanical strength can be controlled, for example, by heating the active material particles. In terms of accurately controlling the mechanical strength of the secondary particles, it is preferable, before the step of preparing the electrode mixture paste, to crush the first active material particles and then heat them for re-agglomeration.
Specifically, the first active material particles with a mean particle size of 5 to 20 µm are crushed and then heated for re-agglomeration. The mean particle size of the agglomerated particles is preferably 5 to 20 µm. The heating conditions are not particularly limited, and can be suitably selected depending on the desired mechanical strength. The heating temperature is, for example, preferably 500 to 800°C.

Compressive stress is described. When the coating is compressed, various compressive stresses are applied to the active material particles contained in the coating. It is thus difficult to actually measure the stress applied to the active material particles. However, in the step of compressing the coating, the mean particle size of the active material decreases from the mean particle size of the active material before the compression. Thus, in the invention, the compressive stress is defined as the amount of change in the mean particle size of the active material. In the invention, the mean particle size of the active material refers to median diameter in the volume basis particle size distribution of the active material. In a preferable embodiment of the invention, the coating is compressed so that the mean particle size D₁ (µm) of the active material decreases by 20 to 50% relative to the mean particle size D₀ (µm) of the active material before the compression (20≤{(D₀-D₁/D₀}×100≤50). In particular, more preferably 30≤{(D₀-D₁)/D₀}×100≤50, and most preferably 40≤{(D₀-D₁)/D₀}×100≤50.

If the value of {(D₀-D₁)/D₀}×100 is lower than 20, almost no active material may be crushed, and the second active material particles may not be formed sufficiently. Hence, since the second active material particles are not sufficiently packed in the gaps between the first active material particles, the packing rate of the electrode mixture layer may not be sufficiently increased.

If the value of {(D₀-D₁)/Do}×100 exceeds 50, the active material may be excessively crushed, and the second active material particles may be formed excessively. Since the second active material particles have a higher friction resistance between the particles than the first active material particles, the packing rate of the electrode mixture layer may not be sufficiently increased.

The method for controlling the compressive stress is not particularly limited. In terms of easily controlling the compressive stress, the compression method is preferably compression (rolling) using rollers. For example, when rollers are used, the compressive stress can be controlled by adjusting the distance between the rollers.

The relationship between the mechanical strength of the active material particles and the compressive stress is described.
When the mechanical strength of the active material particles is too low, the first active material particles are crushed to form the second active material particles before the compression step.
In this case, during the compression, the compressive stress is excessively scattered, and the compressive stress exerted on each individual active material particle decreases. It is thus thought that the control of the packed state of the active material particles in the electrode mixture layer is difficult, and that the packing rate of the electrode mixture layer cannot be sufficiently increased.

Also, when the mechanical strength of the active material particles is too low, if the compressive stress is increased, the particles are excessively crushed. As a result, the second active material particles are excessively formed, and eventually, almost all the active material particles may be crushed, as illustrated in FIG 3. It is thus believed that the packing rate of the electrode mixture layer cannot be sufficiently increased, as described above.

If the mechanical strength of the active material particles is too high relative to the compressive stress, the active material particles resist crushing when compressed. Thus, the second active material particles are not sufficiently formed, and eventually, almost no second active material particles may be formed, as illustrated in FIG. 2. It is thus believed that the packing rate of the electrode mixture layer cannot be sufficiently increased, as described above.

The first active material particles may be primary particles or agglomerated primary particle. The second active material particles may also be primary particles or agglomerated primary particles.

While the invention is advantageously applicable to either the positive electrode or negative electrode of a non-aqueous electrolyte secondary battery, it is particularly effective for the positive electrode.

### Next, the non-aqueous electrolyte secondary battery is described.

The non-aqueous electrolyte secondary battery of the invention includes an electrode group, a non-aqueous electrolyte, and a battery case. The electrode group includes the above-described electrode for a non-aqueous electrolyte secondary battery, a counter electrode, and a porous insulating layer interposed therebetween. In the non-aqueous electrolyte secondary battery, other constituent elements than the above-mentioned electrode, namely, the counter electrode, the porous insulating layer, the non-aqueous electrolyte, and the battery case, are not particularly limited. Hereinafter, a lithium ion secondary battery is described in detail as an embodiment of the non-aqueous electrolyte secondary battery according to the invention.

The non-aqueous electrolyte secondary battery can be produced by the following method. First, a positive electrode and a negative electrode are wound with a porous insulating layer interposed therebetween, to form an electrode group, which is then placed in a battery case. A positive electrode current collector is electrically connected to a positive electrode terminal with a positive electrode lead. A negative electrode current collector is electrically connected to a negative electrode terminal with a negative electrode lead. Thereafter, a non-aqueous electrolyte is injected into a battery case, and the battery case is sealed with a seal plate, to produce a non-aqueous electrolyte secondary battery.

The shape of the non-aqueous electrolyte secondary battery is not particularly limited. For example, a well known structure such as the cylindrical type, the prismatic type, or the sheet type can be employed.

The positive electrode includes a positive electrode active material capable of absorbing and desorbing lithium ions as an essential component, and includes optional components such as a conductive agent and a binder.

The positive electrode active material is not particularly limited, and examples include lithium transition metal composite oxides and transition metal polyanion compounds.
Examples of lithium transition metal composite oxides include lithium cobaltate (LiCoO₂), modified lithium cobaltate, lithium nickelate (LiNiO₂), modified lithium nickelate, lithium manganate (LiMn₂O₂), modified lithium manganate, and such oxides in which Co, Ni or Mn is partially replaced with other transition metal element(s), typical metal(s) such as aluminum, or alkaline earth metal(s) such as magnesium. In terms of the shape and mechanical strength of particles, the invention is particularly effective when using nickel lithium composite oxides such as lithium nickelate and modified lithium nickelate.
The nickel lithium composite oxides are preferably compounds represented by LiNi₁₋ₓMxO₂ where M is at least one selected from Co, Mn, Al, Fe, and Cr. With respect to x, preferably 0≤x≤0.5, and more preferably 0.1≤x≤0.4.

Examples of transition metal polyanion compounds include phosphoric add compounds having the Nasicon or olivine structure and sulfuric add compounds. Examples of transition metals include manganese, iron, cobalt, and nickel.
These positive electrode active materials can be used singly or in combination of two or more of them.

The conductive agent is not particularly limited if it is capable of ensuring the electrical conductivity of the positive electrode mixture layer. For example, carbon materials such as carbon black, acetylene black, ketjen black, and graphite can be used. These conductive agents can be used singly or in combination of two or more of them.

The binder is not particularly limited if it is capable of bonding an active material and a conductive agent to the current collector surface. Examples include polytetrafluoroethylene (PTFE), modified PTFE, polyvinylidene fluoride (PVDF), modified PVDF, fluorine-containing resins such as fluorocarbon rubber, thermoplastic resins such as polypropylene and polyethylene, and modified acrylonitrile rubber particles (e.g., "BM-500B (trade name)" available from Zeon Corporation).
When PTFE or BM-500B is used as the binder, it is preferable to use a thickener in combination. Examples of thickeners include carboxymethyl cellulose (CMC), polyethylene oxide (PEO), and modified acrylonitrile rubber (e.g., BM-720H (trade name) available from Zeon Corporation).

The positive electrode is produced, for example, as follows.
A positive electrode mixture paste is prepared by mixing a positive electrode active material, if necessary, a conductive agent, a binder, and a predetermined solvent. The positive electrode mixture paste is applied onto a surface of a current collector and dried to form a coating. The coating is then compressed to obtain a positive electrode.

The solvent can be an organic solvent such as N-methyl-2-pyrrolidone, water, or the like. In terms of improving the stability of the positive electrode mixture paste over time and the dispersibility thereof, an additive such as a surfactant may be added.

The positive electrode current collector can be, for example, a foil made of a metal which is stable at the positive electrode potential, such as aluminum, or a film containing a metal on the surface. In terms of further enhancing the current collecting capability of the current collector, the surface may be roughened or perforated.

The negative electrode includes a negative electrode active material capable of absorbing and desorbing lithium ions as an essential component, and includes a binder as an optional component.

The negative electrode active material is not particularly limited and can be a known material. Examples include carbon materials such as various natural graphites, various artificial graphites, petroleum coke, carbon fiber, baked organic polymers, carbon nanotubes and carbon nanohoms, oxides, composite materials containing silicon or tin such as silicides, various metals, and alloy materials.

The binder is not particularly limited, but it is preferable to use rubber particles since they can provide sufficient bonding properties in a small amount. In particular, it is preferable to use rubber particles containing a styrene unit and a butadiene unit. Examples of such binders include styrene-butadiene copolymer (SBR) and modified SBR. When rubber particles are used as the negative electrode binder, it is preferable to use a thickener in combination. Examples of thickeners include those containing a water-soluble polymer, and the water-soluble polymer is preferably a cellulose type resin, and CMC is particularly preferable. It is also possible to use PVDF, modified PVDF, or the like as the binder.

The negative electrode is produced, for example, as follows.
A negative electrode mixture paste is prepared by mixing a negative electrode active material, if necessary, a binder, and a predetermined solvent. The negative electrode mixture paste is applied onto a surface of a current collector and dried to form a coating. The coating is then compressed to obtain a negative electrode.

The solvent is not particularly limited; for example, the same solvents as those listed as positive electrode solvents can be used.
The negative electrode current collector can be, for example, a foil made of a metal which is stable at the negative electrode potential, such as copper, or a film whose surface has a metal which is stable at the negative electrode potential, such as copper. In terms of further enhancing the current collecting capability of the current collector, the surface may be roughened or perforated.

The porous insulating layer is not particularly limited; however, it is preferably a micro-porous film or non-woven fabric that is a material capable of withstanding the environment in which the battery is used, allows electrolyte ions to pass through, and is capable of insulating the positive electrode from the negative electrode. An example is a micro-porous film made of a polyolefin resin. The polyolefin resin can be polyethylene, polypropylene, or the like. The micro-porous film may be a mono-layer film made only of one resin, a multi-layer film made of two or more resins, or a multi-layer film made of a resin and an inorganic material such as alumina.

The non-aqueous electrolyte includes a non-aqueous solvent and a solute dissolved in the non-aqueous solvent.
The non-aqueous solvent is not particularly limited, and for example, conventional non-aqueous solvents can be used without any particular limitation. Examples include carbonates, halogenated hydrocarbons, ethers, ketones, nitriles, lactones, and oxolane compounds. In particular, solvent mixtures of a high dielectric constant solvent such as ethylene carbonate (EC) or propylene carbonate (PC) and a low viscosity solvent such as dimethyl carbonate (DMC), diethyl carbonate (DEC), or ethyl methyl carbonate (EMC) are preferred. It is also possible to use a sub-solvent such as dimethoxyethane (DME), tetrahydrofuran (THF), or γ-butyrolactone (GBL).

The non-aqueous electrolyte may contain various additives in order to improve battery characteristics such as storage characteristics, cycle characteristics, and safety. Examples of additives include vinylene carbonate (VC), cyclohexyl benzene (CHB), and derivatives thereof.

The solute is not particularly limited, and examples include inorganic salts selected from LiPF₆, LiBF₄, LiClO₄, and LiAsF₆, derivatives of such inorganic salts, organic salts selected from LiSO₃CF₃, LiC(SO₃CF₃)₂, LiN(SO₃CF₃)₂, LiN(SO₂C₂F₅)₂, and LiN(SO₂CF₃)(SO₂C₄F₉), and derivatives thereof.
The concentration of the solute in the non-aqueous electrolyte is not particularly limited, and is, for example, 0.5 to 2.0 mol/l.

The battery case is not particularly limited, and for example, a known suitable material can be used. Examples of materials include aluminum alloys, nickel-plated iron alloys, and laminates of various resins and metals.

### [Examples]

The invention is hereinafter described specifically by way of Examples and Comparative Examples. These Examples, however, are not to be construed as limiting in any way the invention.

### [Example 1]

### (a) Preparation of positive electrode

A positive electrode mixture paste was prepared by stirring 3 kg of "Cellseed N (trade name)" (lithium nickelate, LiNiO₂) of NIPPON CHEMICAL INDUSTRIAL CO., LTD., serving as first active material particles, 1 kg of "#1320 (trade name)" (NMP solution containing 12% by weight of PVDF) of Kureha Corporation, serving as a positive electrode binder, 90 g of acetylene black, serving as a conductive agent, and a suitable amount of NMP (N-methyl-2-pyrrolidone), serving as a solvent, with a double-arm kneader.
The first active material particles had a mean particle size (D50) of 11 µm and an average circularity of 0.97, and particles with a particle size of 11 µm and a circularity of 0.97 had a compression rupture strength of 77 MPa.

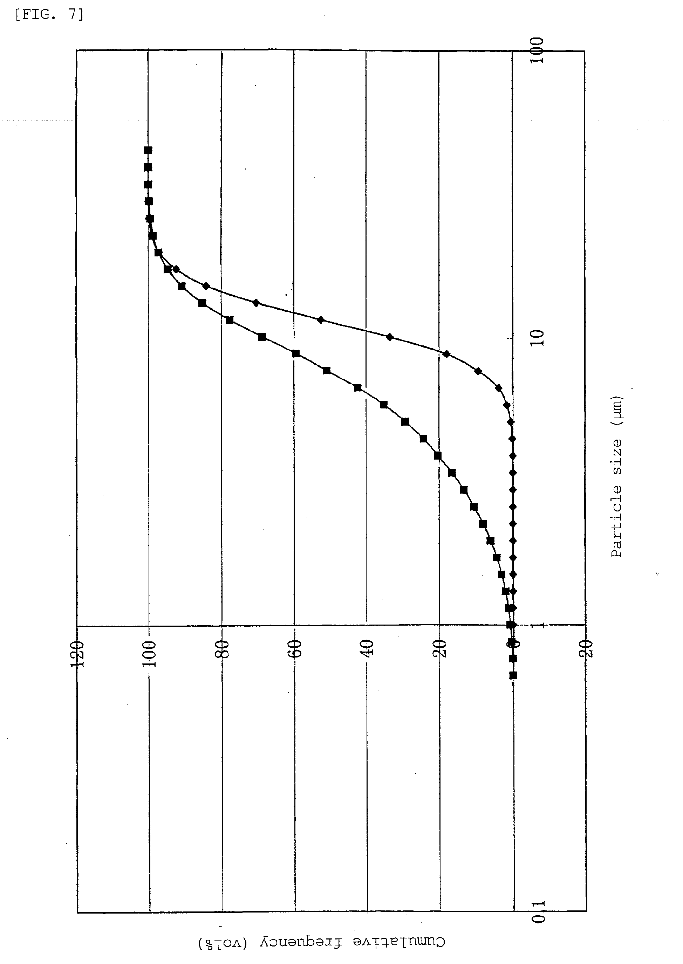

The positive electrode mixture paste was applied onto both sides of a 15-µm thick aluminum foil (positive electrode current collector) except for the area to which a positive electrode lead was to be connected, and dried to form a coating. The coating was then compressed with rollers, to form positive electrode mixture layers. In the compression, the distance between the two rollers was set to 70 µm to adjust the compressive stress, so that {(D₀-D₁)/D₀}×100 was adjusted to 33%. The volume basis particle size distribution of the active material is shown in FIG 7. Thereafter, the electrode plate was slit to such a width that it was capable of being inserted into a battery case for a cylindrical battery (product number 18650). In this way, a positive electrode hoop was produced.

### (b) Evaluation of positive electrode

Part of the positive electrode was sampled, and the packing rate of the electrode mixture layer was measured. The packing rate of the electrode mixture layer was obtained by (true volume of electrode mixture layer)/(apparent volume of electrode mixture layer). The true volume of the electrode mixture layer was determined from the true density of each of the positive electrode active material, PVDF, and the conductive agent, and the weight ratios thereof in the positive electrode mixture. The apparent volume of the electrode mixture layer was calculated from the thickness and area of the electrode mixture layer.

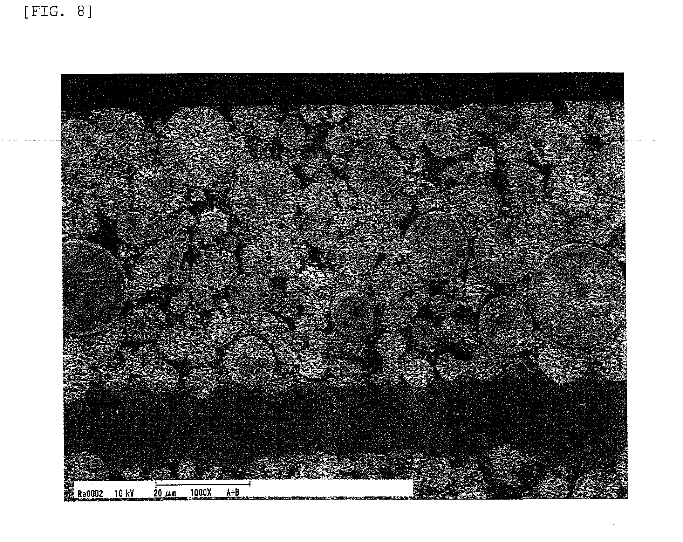

Also, a piece of the positive electrode coated with an epoxy resin was cured. Subsequently, a cross-section of the positive electrode was polished, and the packed state of the active material in the electrode mixture layer was observed. For the observation of the packed state, a scanning electron microscope (VE-9800 (product number) available from Keyence Corporation) was used. FIG 8 shows an SEM of the electrode mixture layer of Example 1.

### (c) Preparation of negative electrode

A negative electrode mixture paste was prepared by stirring 3 kg of artificial graphite, serving as a negative electrode active material, 75 g of "BM-400B (trade name)" (aqueous dispersion containing 40% by weight of modified styrene-butadiene copolymer) of Zeon Corporation, serving as a negative electrode binder, 30 g of CMC, serving as a thickener, and a suitable amount of water, serving as a solvent, with a double-arm kneader.

The negative electrode mixture paste was applied onto both sides of a 10-µm thick copper foil (negative electrode current collector) except for the area to which a negative electrode lead was to be connected, and dried to form a coating. The coating was then compressed with rollers, to form negative electrode mixture layers with an active material layer density (active material weight/electrode mixture layer volume) of 1.4 g/cm³. At this time, the thickness of the electrode plate comprising the copper foil and the electrode mixture layers was adjusted to 180 µm. Thereafter, the electrode plate was slit to such a width that it was capable of being inserted into the battery case for a cylindrical battery (product number 18650). In this way, a negative electrode hoop was produced.

### (d) Preparation of non-aqueous electrolyte

A non-aqueous electrolyte was prepared by dissolving a solute at a concentration of 1 mol/l in a non-aqueous solvent comprising a mixture of EC, DMC, and EMC in a volume ratio of 2:3:3. Also, 3 parts by weight of VC was added per 100 parts by weight of the non-aqueous electrolyte.

### (e) Production of battery

A cylindrical battery with a product number of 18650 was produced in the following procedure.
First, each of the positive electrode and the negative electrode was cut to a predetermined length. One end of a positive electrode lead was connected to the connecting area for the positive electrode lead, while one end of a negative electrode lead was connected to the connecting area for the negative electrode lead. Thereafter, a porous insulating layer, comprising a 15-µm thick micro-porous film made of polyethylene resin, was placed between the positive electrode and the negative electrode, and this was wound to form a cylindrical electrode group. The electrode group was sandwiched between an upper insulating ring and a lower insulating ring, and was then placed in the battery case. Subsequently, 5 g of the non-aqueous electrolyte was weighed and injected into the battery case, and the pressure was lowered to 133 Pa to impregnate the electrode group with the non-aqueous electrolyte.

The other end of the positive electrode lead was welded to the backside of a battery lid. The other end of the negative electrode lead was welded to the inner bottom face of the battery case. Lastly, the opening of the battery case was sealed with the battery lid the circumference of which was fitted with an insulating packing, to produce a cylindrical lithium ion secondary battery.

### (f) Charge/discharge test of battery

Each battery was charged and discharged between 3 V and 4.2 V at a constant current of 400 mA at an ambient temperature of 20°C, and the product of discharge time and current value was used as discharge capacity (mAh).

### [Example 2]

A lithium ion secondary battery was produced in the same manner as in Example 1 except for the following. In order to increase the mechanical strength of the first active material particles, the first active material particles were heated at a temperature of 750°C in air atmosphere for 50 hours. As a result, the first active material particles had a mean particle size of 11 µm and an average circularity of 0.99, and particles with a particle size of 11 µm and a circularity of 0.97 had a compression rupture strength of 94 MPa. Further, the distance between the rollers used for the compression was set to 70 µm to adjust the compressive stress so that {(D₀-D₁)/D₀}×100 was adjusted to 20%.

### [Example 3]

A lithium ion secondary battery was produced in the same manner as in Example 2, except that the distance between the rollers used for the compression was set to 20 µm to adjust the compressive stress so that {(D₀-D₁)/Do}×100 was adjusted to 40%.

### [Example 4]

A lithium ion secondary battery was produced in the same manner as in Example 1 except for the following. Using a jet mill "Co-Jet (trade name)" available from Seishin Enterprise Co., Ltd., Cellseed N was crushed until the mean particle size became 3 µm, to obtain primary particles. The primary particles were heated at a temperature of 600°C in air atmosphere for 10 hours, to obtain first active material particles comprising agglomerated primary particles. The first active material particles had a mean particle size of 10 µm and an average circularity of 0.95, and particles with a particle size of 10 µm and a circularity of 0.97 had a compression rupture strength of 60 MPa. The distance between the rollers used for the compression was set to 70 µm to adjust the compressive stress so that {(D₀-D₁)/D₀}×100 was adjusted to 50%.

### [Example 5]

A lithium ion secondary battery was produced in the same manner as in Example 4, except that the distance between the rollers used for the compression was set to 120 µm to adjust the compressive stress so that {(D₀-D₁)/D₀}×100 was adjusted to 20%.

### [Example 6]

A lithium ion secondary battery was produced in the same manner as in Example 1 except for the following. Using a jet mill "Co-Jet (trade name)" available from Seishin Enterprise Co., Ltd., Cellseed N was crushed until the mean particle size became 3 µm, to obtain primary particles. The primary particles were heated at a temperature of 750°C in air atmosphere for 50 hours, to obtain first active material particles comprising agglomerated primary particles. The first active material particles had a mean particle size of 11 µm and an average circularity of 0.96, and particles with a particle size of 11 µm and a circularity of 0.97 had a compression rupture strength of 68 MPa. The distance between the rollers used for the compression was set to 70 µm to adjust the compressive stress so that {(D₀-D₁)/Do}×100 was adjusted to 40%. It is noted that the heating temperature was heightened and the heating time was increased. Thus, the primary particles of the first active material particles of Example 6 were sintered more strongly than the first active material particles of Example 4, and the mechanical strength was high.

### [Comparative Example 1]

A lithium ion secondary battery was produced in the same manner as in Example 1, except that the distance between the rollers used for the compression was set to 20 µm to adjust the compressive stress so that {(D₀-D₁}/D₀}×100 was adjusted to 60%.

### [Comparative Example 2]

A lithium ion secondary battery was produced in the same manner as in Example 1, except that the distance between the rollers used for the compression was set to 120 µm to adjust the compressive stress so that {(D₀-D₁)/D₀}×100 was adjusted to 10%.

### [Comparative Example 3]

A lithium ion secondary battery was produced in the same manner as in Example 1 except for the following. In order to increase the mechanical strength of the first active material particles, the first active material particles were heated at a temperature of 750°C in air atmosphere for 50 hours. As a result, the first active material particles had a mean particle size of 11 µm and an average circularity of 0.99, and particles with a particle size of 11 µm and a circularity of 0.97 had a compression rupture strength of 94 MPa. The distance between the rollers used for the compression was set to 120 µm to adjust the compressive stress so that {(D₀-D₁)/D₀}×100 was adjusted to 0% (i.e., the active material particles were not crushed due to the large distance between the rollers).

**[Table 1]**

| | Crushing | Heating | Mean circularity | Compression rupture strength (MPa) | Distance between rollers (µm) | (D₀-D₁)/D₀ ×100(%) |
|---|---|---|---|---|---|---|
| Example 1 | No | No | 0.97 | 77 | 70 | 33 |
| Example 2 | No | Yes | 0.99 | 94 | 70 | 20 |
| Example 3 | No | Yes | 0.99 | 94 | 20 | 40 |
| Example 4 | Yes | Yes | 0.95 | 60 | 70 | 50 |
| Example 5 | Yes | Yes | 0.95 | 60 | 120 | 20 |
| Example 6 | Yes | Yes | 0.96 | 68 | 70 | 40 |
| Comparative Example 1 | No | No | 0.97 | 77 | 20 | 60 |
| Comparative Example 2 | No | No | 0.97 | 77 | 120 | 10 |
| Comparative Example 3 | No | Yes | 0.99 | 94 | 120 | 0 |
| Comparative Example 4 | Yes | Yes | 0.95 | 60 | 20 | 75 |
| Comparative Example 5 | Yes | Yes | 0.96 | 68 | 20 | 70 |
| Comparative Example 6 | Yes | Yes | 0.96 | 68 | 120 | 15 |
| Comparative Example 7 | Yes | No | - | - | 20 | - |

### [Comparative Example 4]

A lithium ion secondary battery was produced in the same manner as in Example 4, except that the distance between the rollers used for the compression was set to 20 µm to adjust the compressive stress so that {(D₀-D₁)/D₀}×100 was adjusted to 75%.

### [Comparative Example 5]

A lithium ion secondary battery was produced in the same manner as in Example 6, except that the distance between the rollers used for the compression was set to 20 µm to adjust the compressive stress so that {(D₀-D₁)/D₀}×100 was adjusted to 70%.

### [Comparative Example 6]

A lithium ion secondary battery was produced in the same manner as in Example 6, except that the distance between the rollers used for the compression was set to 120 µm to adjust the compressive stress so that {(D₀-D₁)/D₀}×100 was adjusted to 15%.

### [Comparative Example 7]

A lithium ion secondary battery was produced in the same manner as in Example 1 except for the following. Using a jet mill "court (trade name)" available from Seishin Enterprise Co., Ltd., Cellseed N was crushed until the mean particle size became 3 µm, to obtain primary particles. These primary particles were used as the positive electrode active material. Further, the distance between the rollers used for the compression was set to 20 µm to adjust the compressive stress.

The conditions of Examples 1 to 6 and Comparative Examples 1 to 7 are shown in Table 1, and the results are shown in Table 2. In Table 2, A represents the packed state of active material as illustrated in FIG 4, B represents the state as illustrated in FIG. 5, and C represents the state as illustrated in FIG 6.

**[Table 2]**

| | Packing rate (vol%) | Discharge capacity (mAh) | Packed state |
|---|---|---|---|
| Example 1 | 0.82 | 2050 | A |
| Example 2 | 0.79 | 1975 | A |
| Example 3 | 0.85 | 2130 | A |
| Example 4 | 0.89 | 2220 | A |
| Example 5 | 0.80 | 2010 | A |
| Example 6 | 0.86 | 2160 | A |
| Comparative Example 1 | 0.75 | 1870 | C |
| Comparative Example 2 | 0.69 | 1720 | B |
| Comparative Example 3 | 0.65 | 1610 | B |
| Comparative Example 4 | 0.77 | 1920 | C |
| Comparative Example 5 | 0.74 | 1860 | C |
| Comparative Example 6 | 0.70 | 1740 | B |
| Comparative Example 7 | 0.66 | 1630 | C |

It should be noted that the observed state of Comparative Example 7 was similar to C since the first active material particles were merely crushed by the jet mill.

Table 2 shows that the packed state A of active material, i.e., the positive electrode in which the non-spherical second active material particles were packed so as to dose the gaps between the substantially spherical first active material particles, resulted in a high packing rate of the electrode mixture layer. Further, the batteries using such positive electrodes exhibited excellent discharge capacities.

In particular, Example 4 exhibited the highest packing rate of the electrode mixture layer and the highest discharge capacity of the battery. This is probably because the mechanical strength of the active material particles and the compressive stress were controlled favorably.

On the other hand, the packed state B of active material, i.e., the positive electrode in which only the first active material particles were packed, and the packed state C of active material, i.e., the positive electrode in which only the second active material particles were packed, resulted in a low packing rate of the electrode mixture layer. Further, the batteries using such positive electrodes exhibited low discharge capacities.

Accordingly, it has been found that an electrode in a preferable packed state, i.e., packed state A of active material, can be produced by applying a suitable compressive stress in the step of compressing the electrode, for example, by changing the mechanical strength of the active material particles and the distance between the rollers.

In Comparative Example 2, Comparative Example 3, and Comparative Example 6, since the compressive stress was small relative to the mechanical strength of the active material particles, most of the active material particles were not crushed. Probably for this reason, many of the gaps between the active material particles remained, and the packing rate of the electrode mixture layer was low.

In Comparative Example 1, Comparative Example 4, and Comparative Example 5, since the compressive stress was large relative to the mechanical strength of the active material particles, substantially all the active material particles were crushed. At this time, gaps were formed between the second active material particles, and probably for this reason, the packing rate of the electrode mixture layer was low.

Accordingly it has been found that it is most preferable to pack the second active material particles so as to dose the gaps between the first active material particles, and to use secondary particles which have been produced by crushing to primary particles and then re-agglomerated. Also, it has been found that such an electrode mixture layer can be produced by suitably adjusting the mechanical strength of the active material particles and the compressive stress.

In the foregoing Examples, lithium nickelate was used as the positive electrode active material, but the active material is not particularly limited, since the invention is characterized by first active material particles and second active material particles packed so as to dose the gaps between the first active material particles. For example, the invention is also effectively applicable to other positive electrode active materials and negative electrode active materials.

### [Industrial Applicability]

As described above, the electrode for a non-aqueous electrolyte secondary battery according to the invention has a higher packing rate of the electrode mixture layer than conventional rates. The non-aqueous electrolyte secondary battery including this electrode can have a superior charge/discharge capacity to conventional capacities, and therefore, is useful in the overall applications of non-aqueous electrolyte secondary batteries.

### [Reference Signs List]

- 1: First active material particles
- 2: Second active material particles
- 3: First active material particles
- 4: Second active material particles
- 5: Primary particles
- 6: Current collector

## Claims

1. An electrode for a non-aqueous electrolyte secondary battery, comprising a current collector and an electrode mixture layer formed on a surface of the current collector,
wherein the electrode mixture layer includes an active material and a binder,
the active material comprises first active material particles of substantially spherical shape and second active material particles of non-spherical shape, and
the second active material particles are particles of the first active material particles crushed and are packed so as to dose gaps between the first active material particles.

2. The electrode for a non-aqueous electrolyte secondary battery in accordance with claim 1, wherein the electrode mixture layer has a packing rate of 0.79 or more.

3. A non-aqueous electrolyte secondary battery, comprising an electrode group, a non-aqueous electrolyte, and a battery case,
wherein the electrode group includes the electrode for a non-aqueous electrolyte secondary battery recited in claim 1, a counter electrode, and a porous insulating layer interposed therebetween.

4. The non-aqueous electrolyte secondary battery in accordance with claim 3, wherein the electrode for a non-aqueous electrolyte secondary battery is a positive electrode, and the active material comprises a nickel lithium composite oxide.

5. A method for producing an electrode for a non-aqueous electrolyte secondary battery, comprising the steps of:
preparing an electrode mixture paste including first active material particles and a binder;
applying the electrode mixture paste onto a surface of a current collector and drying it to form a coating; and
compressing the coating to form an electrode mixture layer,
wherein the step of compressing comprises compressing the coating to partially crush the first active material particles, so that second active material particles are formed and packed so as to dose gaps between the first active material particles.

6. The method for producing an electrode for a non-aqueous electrolyte secondary battery in accordance with claim 5, wherein the step of compressing comprises compressing the coating so that the mean particle size of the active material decreases by 20% to 50% relative to the mean particle size of the active material before the compression.

7. The method for producing an electrode for a non-aqueous electrolyte secondary battery in accordance with claim 5, further comprising, before the step of preparing the electrode mixture paste, the step of crushing the first active material particles and then heating them to re-agglomerate them.
